# FASCICULE DE BREVET EUROPEEN

(11) **EP 2 068 665 B1**
(45) Date de publication et mention de la délivrance du brevet: **19.06.2013**
(21) Numéro de dépôt: 07826263.1
(22) Date de dépôt: 05.09.2007
(51) Int. Cl.: A23P 1/08, A23L 1/00, A21C 9/06, A47J 43/20, A22C 25/22

(54) **DISPOSITIF DE PREPARATION D'ALIMENTS ROULES**
LEBENSMITTELZUBEREITUNGSVORRICHTUNG
FOOD PREPARATION DEVICE

(30) Priorité: 05.09.2006 CH 14232006
(43) Date de publication de la demande: 17.06.2009
(73) Titulaire: Rolland, Franck, 1006 Lausanne (CH)
(72) Inventeur: Rolland, Franck, 1006 Lausanne (CH)
(74) Mandataire: Grosfillier, Philippe
(86) Numéro de dépôt international: PCT/IB2007/053569
(87) Numéro de publication internationale: WO 2008/029355

(56) Documents cités:
- WO-A-2006/043560
- WO-A-2006/129089
- JP-A- 11 266 808
- US-A- 4 953 455
- US-A- 6 001 403
- US-A1- 2003 097 938

## Description

La présente invention concerne un dispositif de préparation d'aliments roulés, comme par exemple des makis sushis, ou d'autres aliments ou produits de conception similaire.

Le document WO 2006/043560 montre un dispositif de préparation d'aliments comprenant deux coques dont l'intérieur est en forme de partie de cylindre et un élément souple.

Pour mieux expliquer le dispositif de la présente invention, on décrira un exemple utilisé pour la confection de makis sushis mais il va sans dire que cet exemple n'est pas limitatif et que d'autres aliments ou produits peuvent parfaitement être confectionnés au moyen du dispositif selon l'invention.

Comme on le sait, un maki sushi est principalement constitué de riz, et de poisson cru et/ou légumes, le tout étant emballé dans une feuille d'algue et se présentant sous une forme généralement cylindrique.

Pour la confection d'un maki sushi, il faut donc placer le riz et les autres ingrédients sur la feuille d'algue et la rouler. La feuille d'algue étant très fine, cette opération est difficile à réaliser sans déchirer la feuille, de même il est aussi difficile de confectionner des makis sushis ayant une belle forme cylindrique.

Le but de l'invention est ainsi de surmonter ces problèmes au moyen d'un dispositif simple, bon marché et facile à utiliser.

L'invention sera mieux comprise à l'aide de la description d'un mode d'exécution et des figures annexées, dans lesquelles:
La figure 1 représente une vue en perspective du dispositif fermé selon l'invention;
Les figures 2 à 5 représentent une vue en perspective du dispositif ouvert selon l'invention;
La figure 6 représente une vue en perspective du dispositif fermé selon l'invention;
La figure 7 représente une vue en coupe du dispositif fermé selon l'invention et
La figure 8 représente une vue en perspective du dispositif ouvert selon l'invention avec un aliment confectionné.

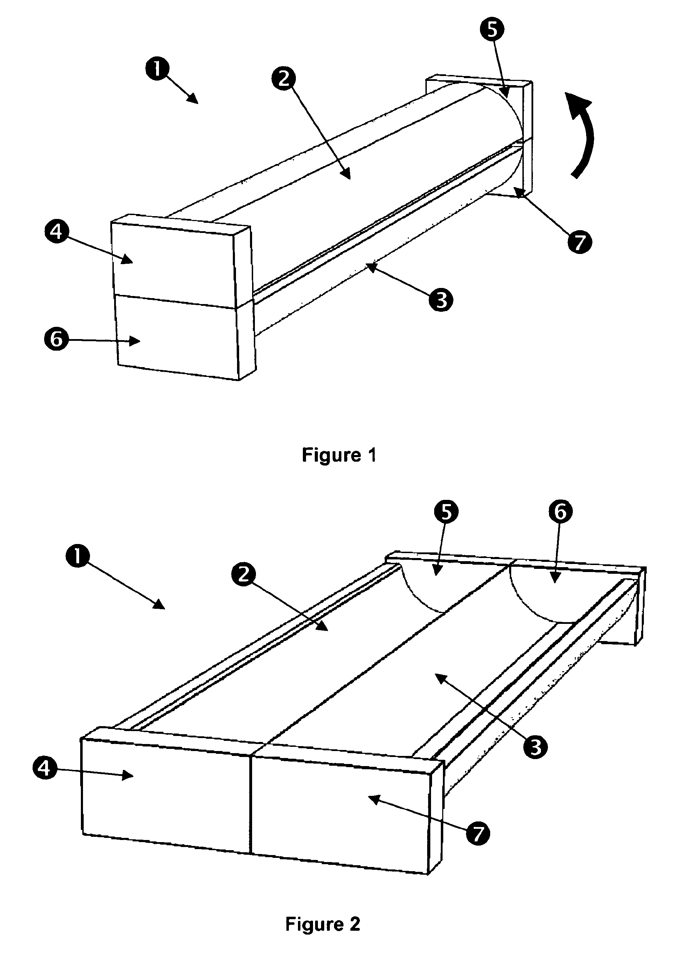

Dans la figure 1, l'on a représenté le dispositif 1 selon l'invention en position fermée. Il comprend deux coques 2, 3 en forme de parties de section (de façon préférentielle mais non-obligatoire) partiellement circulaire qui sont de préférence (mais non obligatoire) articulées entre elles au moyen de charnières (non représentées). Chaque coque 2, 3 est de préférence fermée à chacune de ses extrémités par une plaque 4, 5, respectivement 6, 7, de préférence de forme généralement rectangulaire. Une autre forme est bien sûr envisageable. Ces plaques ne sont pas indispensables et l'on peut s'en passer ou les remplacer par un autre moyen équivalent.

A la figure 2, le dispositif 1 est représenté à l'état ouvert, montrant ainsi les surfaces intérieures des deux coques 2, 3 qui ont une forme creuse.

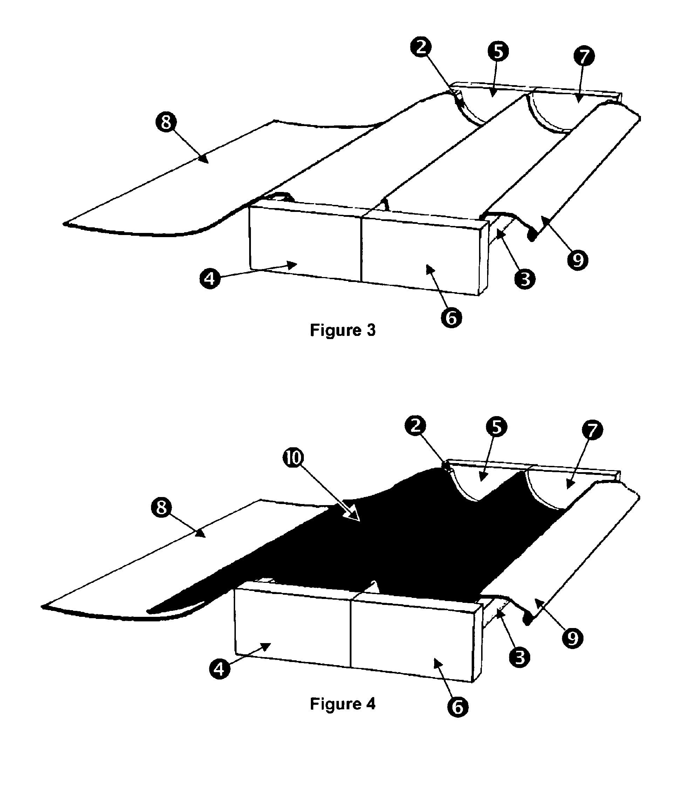

A la figure 3, l'on a représenté le dispositif à l'état ouvert et dans lequel l'on a disposé un élément souple sous forme d'un film en matière synthétique 8 qui est utilisé pour la confection de l'aliment. De façon optionnelle, le film 8 peut comporter à l'une de ses extrémités un renflement 9 dont l'utilité sera expliquée plus loin.

Pour la préparation d'un maki sushi, on dépose dans le dispositif de la figure 3 une feuille d'algue 10. Comme représenté dans la figure 4, le bord de la feuille d'algue du côté droit de la figure 4 est à peu près aligné sur le bord de la coque 3 tandis que le bord de la feuille côté gauche de la figure s'étend au delà de la coque 2.

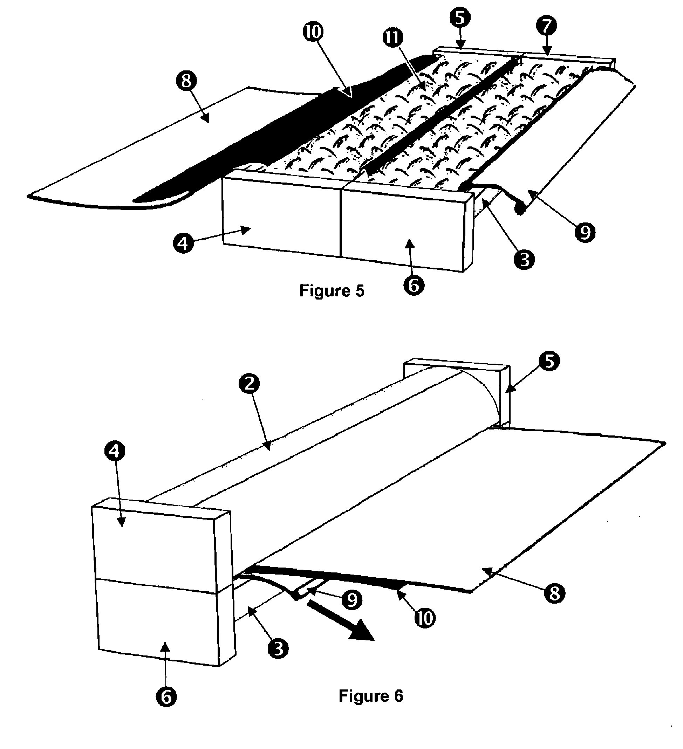

Comme représenté dans la figure 5, on charge ensuite le dispositif 1 des aliments que l'on veut emballer dans la feuille d'algue, par exemple du riz, du poisson cru et/ou des légumes formant ainsi les parties d'aliments 11 dans chaque coque 2, 3.

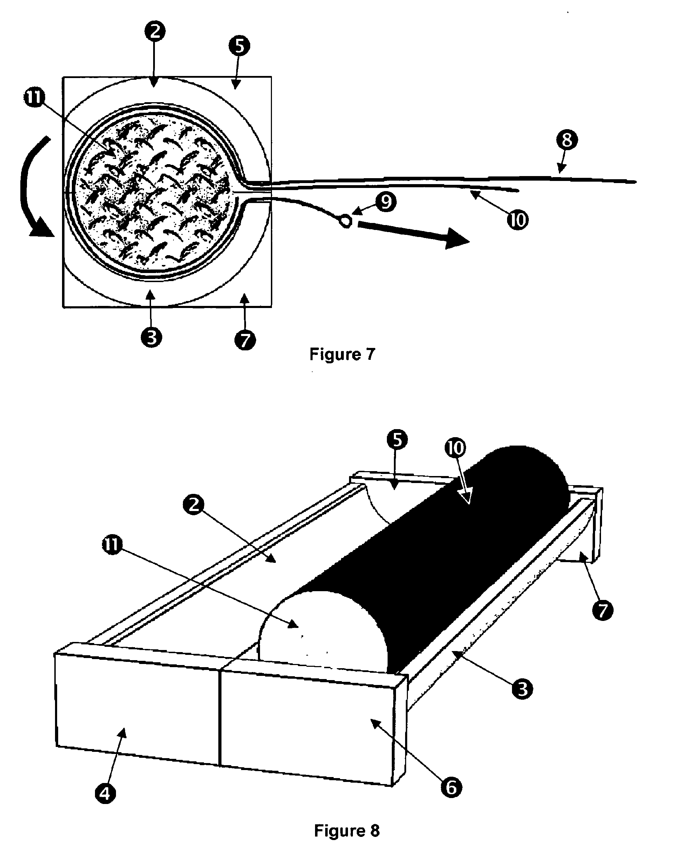

Une fois chargées de la façon désirée, on referme ensuite les deux coques 2 et 3 comme représenté à la figure 6, et l'on tire sur le film 8 par l'intermédiaire du renflement 9, comme indiqué par la flèche dans la figure 6. La figure 7 est une coupe transversale du dispositif de la figure 6 qui permet de mieux comprendre le fonctionnement. Ainsi, par le tirage du film 8, on entraîne en rotation par frottement la feuille d'algue 10 et les aliments à emballer 11, ce qui permet de "rouler" ceux-ci dans la feuille 10 et d'obtenir le résultat représenté à la figure 8, un aliment confectionné qui a la forme d'un cylindre. Comme on le voit clairement dans la figure 7, il est nécessaire de prévoir une fente entre les coques 2, 3 quand elle sont fermées afin de permettre le passage et l'extraction du film 8.

Bien entendu, l'invention ne se limite pas à la confection de makis sushis mais d'autres aliments emballés, voire d'autres produits, peuvent se fabriquer au moyen du dispositif selon l'invention. On peut par exemple remplacer la feuille d'algue par une crêpe, ou un autre aliment qui a la forme d'une feuille dans laquelle on dépose d'autres ingrédients.

Le deux coques peuvent être articulées entre elles ou non. Si elles ne sont pas articulées, on peut prévoir des moyens de fixation permettant de les fixer l'une par rapport à l'autre (par emboîtement selon le principe d'une partie mâle coopérant avec une partie femelle par exemple). A titre d'exemple, les moyens d'articulation ou d'emboîtement peuvent être placés sur les plaques 4-7.

De même, on peut se passer des plaques disposées aux extrémités des coques. Dans ce cas, il peut être plus facile, lors de l'utilisation du dispositif, de le placer verticalement pour confectionner le produit, l'une des extrémités étant fermée par la surface sur laquelle on prépare le produit. De plus, en l'absence des plaques 4-7, les moyens d'articulation ou d'emboîtement seront situés de préférence, mais non limitativement, sur les coques 2,3.

L'élément souple peut être formé par un film, une toile, ou par tout autre moyen équivalent.

La partie intérieure creuse des coques peut avoir une forme générale cylindrique .

Comme on le comprend, le dispositif de l'invention est très simple, peut être fabriqué pour un coût modeste et peut être utilisé par des particuliers ou des professionnels.

Le dispositif peut être fabriqué en toutes matières appropriées, par exemple en bois, en matière synthétique, en métal, voire en combinaison de matières et on peut l'utiliser pour préparer des aliments comme décrit ci-dessus ou tout autre produit alimentaire ou non.

## Revendications

1. Dispositif (1) pour la préparation d'aliments comprenant au moins deux coques (2,3) dont l'intérieur est en forme de partie de cylindre et un élément souple (8) **caractérisé en ce que** l'élément souple (8) est mobile et destiné à entraîner en rotation des aliments (10,11) situés dans lesdites coques (2,3) lorsqu'elles sont fermées, lesdites coques (2,3) présentant une fente entre elles lorsqu'elles sont fermées pour permettre le passage et l'extraction de l'élément souple (8).

2. Dispositif selon la revendication 1, dans lequel l'élément souple mobile (8) est un film en matière synthétique.

3. Dispositif selon l'une des revendications précédentes, dans lequel les deux coques (2,3) sont articulées l'une par rapport à l'autre.

4. Dispositif selon l'une des revendications 1 ou 2, dans lequel les deux coques (2,3) s'emboîtent l'une dans l'autre.

5. Dispositif selon l'une des revendications précédentes, dans lequel les coques (2,3) comprennent à chaque extrémité une plaque de fermeture (4,5,6,7).

6. Dispositif selon la revendication 5, dans lequel il est articulé par les plaques de fermeture (4,5,6,7).

7. Dispositif selon l'un des revendications précédentes, **caractérisé en ce qu'**il est en bois, ou en matière synthétique, ou en métal, ou en une combinaison de ces matériaux.

8. Procédé de confection d'aliments utilisant le dispositif selon l'une des revendications précédentes, ledit procédé comprenant les étapes suivantes:
- ) on place les deux coques (2, 3) côte à côte,
- ) on dépose l'élément souple (8) dans les deux coques, une extrémité au moins de l'élément souple débordant de l'une des coques, ledit procédé étant **caractérisé en ce que**
- ) on place les aliments sur l'élément souple dans chaque coque,
- ) on referme les coques,
- ) on tire la partie de l'élément souple mobile (8) qui déborde par la fente présente entre les deux coques (2,3) quand elles sont fermées tout en maintenant le dispositif en position fermée entraînant en rotation les aliments placés dans les coques par l'extraction de l'élément souple (8),
- ) on ouvre le dispositif (1) pour libérer les aliments.

## Patentansprüche

1. Vorrichtung (1) zur Zubereitung von Lebensmitteln, umfassend mindestens zwei Schalen (2, 3), deren Inneres die Form eines Zylinderteils hat, und ein biegsames Element (8), **dadurch gekennzeichnet, dass** das biegsame Element (8) beweglich und dazu bestimmt ist, Lebensmittel (10, 11), die sich in den Schalen (2, 3), wenn sie geschlossen sind, befinden, in Drehung anzutreiben, wobei die Schalen (2, 3), wenn sie geschlossen sind, einen Schlitz zwischen sich aufweisen, um die Durchführung und das Herausziehen des biegsamen Elements (8) zu ermöglichen.

2. Vorrichtung nach Anspruch 1, bei dem das bewegliche biegsame Element (8) eine Kunststofffolie ist.

3. Vorrichtung nach einem der vorhergehenden Ansprüche, bei der die beiden Schalen (2, 3) aneinander angelenkt sind.

4. Vorrichtung nach einem der Ansprüche 1 oder 2, bei der die beiden Schalen (2, 3) ineinander gesteckt sind.

5. Vorrichtung nach einem der vorhergehenden Ansprüche, bei der die Schalen (2, 3) an jedem Ende eine Verschlussplatte (4, 5, 6, 7) umfassen.

6. Vorrichtung nach Anspruch 5, bei der sie durch die Verschlussplatten (4, 5, 6, 7) angelenkt ist.

7. Vorrichtung nach einem der vorhergehenden Ansprüche, **dadurch gekennzeichnet, dass** sie aus Holz oder aus Kunststoff oder aus Metall oder aus einer Kombination aus diesen Materialien ist.

8. Verfahren zur Zubereitung von Lebensmitteln, das die Vorrichtung nach einem der vorhergehenden Ansprüche verwendet, wobei das Verfahren die folgenden Schritte umfasst:
- Anordnen der beiden Schalen (2, 3) nebeneinander,
- Legen des biegsamen Elements (8) in die beiden Schalen, wobei mindestens ein Ende des biegsamen Elements über eine der Schalen hinausragt, wobei das Verfahren **dadurch gekennzeichnet ist, dass**
- die Lebensmittel auf dem biegsamen Element in jeder Schale angeordnet werden,
- die Schalen wieder geschlossen werden,
- an dem Teil des beweglichen biegsamen Elements (8) gezogen wird, der durch den zwischen den beiden Schalen (2, 3) vorhandenen Schlitz, wenn sie geschlossen sind, hinausragt, wobei die Vorrichtung in geschlossener Position gehalten wird, wobei die in den Schalen angeordneten Lebensmittel durch Herausziehen des biegsamen Elements (8) in Drehung angetrieben werden,
- Öffnen der Vorrichtung (1) zur Freigabe der Lebensmittel.

## Claims

1. Device (1) for the preparation of food comprising at least two shells (2, 3) of which the inside is in the form of a portion of a cylinder and a flexible element (8) **characterized in that** the flexible element (8) is movable and designed to rotate the food (10, 11) situated in the said shells (2, 3) when they are closed, the said shells (2, 3) having a slot between them when they are closed in order to allow the passage and extraction of the flexible element (8).

2. Device according to claim 1, in which the movable flexible element (8) is a film made of synthetic material.

3. Device according to one of the preceding claims, in which the two shells (2, 3) are articulated relative to one another.

4. Device according to one of Claims 1 and 2, in which the two shells (2, 3) nest into one another.

5. Device according to one of the preceding claims, in which the shells (2, 3) comprise a closure plate (4, 5, 6, 7) at each end.

6. Device according to Claim 5, in which it is articulated by the closure plates (4, 5, 6, 7).

7. Device according to one of the preceding claims, **characterized in that** it is made of wood, or of synthetic material, or of metal, or of a combination of these materials.

8. A method for making food using the device according to one of the preceding claims, the said method comprising the following steps:
- the two shells (2, 3) are placed side by side,
- the flexible element (8) is placed in the two shells, at least one end of the flexible element overlapping one of the shells, the said method being **characterized in that**
- the food is placed on the flexible element in each shell,
- the shells are closed,
- the portion of the movable flexible element (8) that overlaps through the slot that is present between the two shells (2, 3) when they are closed is closed while keeping the device in the closed position rotating the food placed in the shells by the extraction of the flexible element (8),
- the device (1) is opened to release the food.
